Europäisches Patentamt

European Patent Office

Office européen des brevets

(19)

(11) Publication number: **0 067 686**
**A2**

(12) # EUROPEAN PATENT APPLICATION

(21) Application number: **82303039.0**

(22) Date of filing: **11.06.82**

(51) Int. Cl.³: **G 05 F 1/66**
**G 01 N 21/74, G 05 D 23/19**

(30) Priority: **12.06.81 JP 89636/81**

(43) Date of publication of application:
**22.12.82 Bulletin 82/51**

(84) Designated Contracting States:
**CH DE FR GB IT LI NL SE**

(71) Applicant: **Hitachi, Ltd.**
**5-1, Marunouchi 1-chome**
**Chiyoda-ku Tokyo 100(JP)**

(72) Inventor: **Ogawa, Tsutomu**
**2380-2, Tsuda**
**Katsuta-shi(JP)**

(72) Inventor: **Koizumi, Higeaki**
**2-8, Komazawa-1-chome**
**Setagaya-ky Tokyo(JP)**

(72) Inventor: **Harada, Katsuhito**
**663, Ichige**
**Katsuta-shi(JP)**

(74) Representative: **Paget, Hugh Charles Edward et al,**
**MEWBURN ELLIS & CO. 2/3 Cursitor Street**
**London EC4A 1BQ(GB)**

(54) **Power supply device for atomizer used in atomic absorptiometer.**

(57) A power supply device for an atomizer (9) of resistance heating type used in an atomic absorptiometer, which comprises a constant current control circuit including a current negative feedback circuit (5, 16; 5, 36) for maintaining the current supplied to the atomizer (9) at a constant value corresponding to a given current setting signal, a circuit (10, 13, 14) calculating the power supplied to the atomizer (9), and a current compensation circuit (16, 36) for regulating manually or automatically the rate of negative feedback through the negative feedback circuit or the level of the current setting signal in response to a variation of the output signal from the power calculating circuit.

EP 0 067 686 A2

Croydon Printing Company Ltd.

# POWER SUPPLY DEVICE FOR ATOMIZER USED
# IN ATOMIC ABSORPTIOMETER

This invention relates to a power supply device for an atomizer used in an atomic absorptiometer, and more particularly to a power supply device supplying power to such an atomizer in which a cuvette of resistance heating type is employed for atomizing a sample.

In an atomic absorptiometer, an atomizer is generally provided for atomizing a sample to be subjected to measurement, and a beam of light having a wavelength spectrum selected depending on an element to be analyzed in the sample subjected to measurement is directed toward the sample atomized by the atomizer, so that the element contained in the sample can be quantitatively analyzed on the basis of the absorption coefficient of the sample absorbing a predetermined wavelength component of light directed thereto. A cuvette of resistance heating type made of graphite is customarily employed in such an atomizer. In the atomizer including such a cuvette, the level of electric power supplied to the cuvette is varied to raise stepwise the temperature of the cuvette from a low level to a high level to thereby sequentially carry out the stages of sample drying and ashing in order to eliminate unnecessary components of the sample, and, then, the temperature of the cuvette is further raised to carry out the stage of atomizing. In this case, the temperature levels in the individual stages and the durations of these stages are controlled according to a pre-set program selected depending on the factors including the form of the sample and the kind of the element to be analyzed, so that the particular element can be accurately quantitatively analyzed.

In order that the particular element contained in the sample can be atomized as desired in the stage of atomizing, it is required to accurately control the temperature of the cuvette so as to maintain it at a predetermined level, and, to this end, a power supply device comprising current control means capable of maintaining the current supplied to the cuvette of resistance heating type at a predetermined constant level has been customarily employed in the field of art. However, because of the fact that the cuvette is heated in the atomizing stage up to a temperature as high as, for example, about 3,000° although it differs depending on the sample, the material of the cuvette, for example, graphite is consumed after a long time of use at such a high temperature, and its resistance value varies inevitably. Consequently, the prior art current control means provided for maintaining constant the current supplied to the cuvette is no more effective for maintaining constant the power supplied to the cuvette, and the resultant variation of the temperature of the sample makes impossible the accurate quantitative analysis of the particular element.

With a view to obviate the prior art defect pointed out above, it is a primary object of the present invention to provide a power supply device for an atomizer used in an atomic absorptiometer, which device comprises means for monitoring the power supplied to the atomizer in the atomic absorptiometer and means for automatically or manually regulating, on the basis of the result of monitoring, the current supplied to the cuvette by a constant current controlling circuit in the atomizer, whereby to maintain constant the power level supplied to the atomizer.

U.S. Patent No. 4,162,379 issued July 24, 1979 to Carl R. Sebens et al discloses a power supply control circuit analogous to that employed in the present invention. Although both of current and voltage are detected according to the disclosure of this U.S. patent, it seems that the object of this U.S. patent does not reside in the control of the power for maintaining it at a constant level unlike the present invention, and there is not a concrete disclosure as to how the current and voltage are actually controlled.

The objects and features of the present invention will be well understood from the following description of the embodiments of the invention in conjunction with the accompanying drawings, in which:

FIG. 1 is a circuit diagram of a preferred embodiment of the power supply device according to the present invention;

FIG. 2 shows an equivalent circuit of the current regulator circuit shown in FIG. 1;

FIG. 3 is a circuit diagram of another preferred embodiment of the present invention;

FIG. 4 is a diagram showing the detailed structure of the variable resistor and A/D converter shown in FIG. 3; and

FIG. 5 is a circuit diagram of still another preferred embodiment of the present invention.

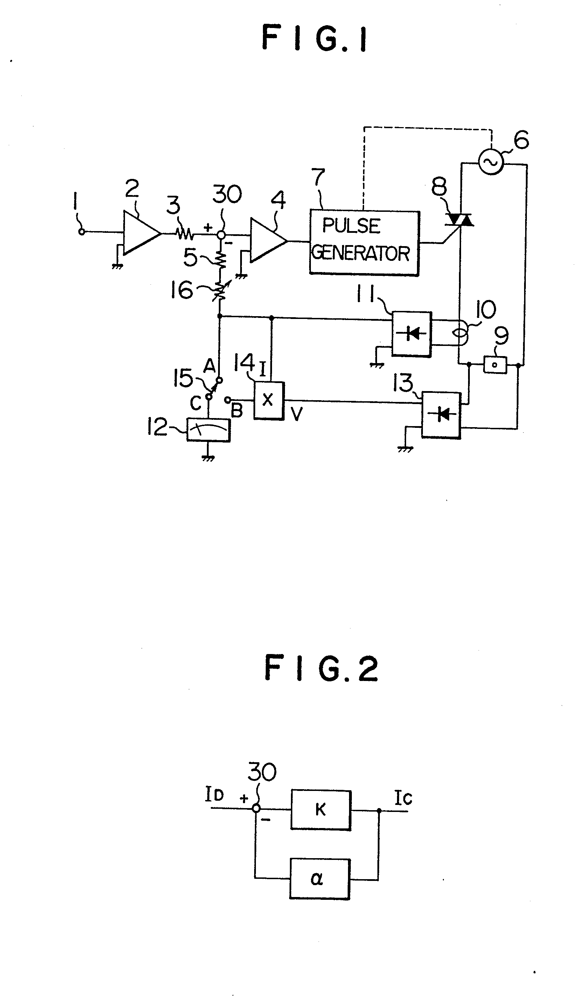

Referring now to FIG. 1, a current setting signal indicative of a given setting of current to be supplied to a cuvette 9 is applied to an input terminal 1. This current setting signal is applied through the input terminal 1 to an input amplifier 2, and the output signal from the input amplifier 2 is applied through a resistor 3 to one of the input terminals of an adder 30. A current signal indicative of the value of current being actually supplied to the cuvette 9 is applied to the other input terminal of the adder 30, as described later. The output signal from the adder 30 is thus indicative of the difference between the two inputs and is applied to a differential amplifier 4. The output terminal of the differential amplifier 4 is connected through a pulse generator 7 to the gate of a thyristor 8 to control the turn-on phase angle of the thyristor 8. Although this thyristor 8 may be either a unilateral one or a bilateral one, the thyristor 8 employed in this embodiment is of the bilateral type, for example, a triac. In response to the application of the output signal from the differential amplifier 4, the pulse generator 7 generates one pulse in each of the positive and negative half cycles of an AC voltage from an AC power source 6 at the phase angle corresponding to the level of the output signal from the differential amplifier 4. The thyristor 8 is turned on, and the power source 6 supplies current to the cuvette 9 through the turned-on thyristor 8. The AC current supplied to the cuvette 9 is detected by a current detector 10, for example, a current transformer and is converted into a DC current by a current rectifier 11. The current signal indicative of the current being supplied to the cuvette 9 is applied to the other input terminal of the adder 30 through a variable resistor 16 and the resistor 5. When the value of the current supplied to the cuvette 9 exceeds the setting provided by the current setting signal, the difference signal appearing from the adder 30 is applied to the pulse generator 7 after being amplified by the differential amplifier 4. The phase of the pulse signal generated from the pulse generator 7 is delayed to delay the turn-on phase angle of the thyristor 8, with the result that the value of the current supplied to the cuvette 9 decreases until it becomes equal to the setting. The structure above described is generally similar to that of the prior art power supply device including the known constant current control circuit.

The present invention is featured by the fact that it further comprises means for monitoring the power supplied to the cuvette 9. This monitoring means includes a voltage rectifier 13 converting the AC voltage applied across the cuvette 9 into a DC voltage for producing a voltage signal V indicative of the AC voltage applied across the cuvette 9, a multiplier 14 multiplying the current signal I, which is indicative of the cuvette current detected by the current detector 10 and rectified by the rectifier 11, by the voltage signal V applied from the rectifier 13, and an indicator or meter 12 indicating the output signal from the multiplier 14. The meter 12 is preferably of the dual scale type so that both of the output from the multiplier 14 and the output from the current rectifier 11 can be monitored. To this end, a change-over switch 15 is provided so that the output from the current rectifier 11 can be read on one of the scales of the meter 12 in the position in which the switch 15 connects its terminal A to the input terminal C of the meter 12, and the output from the multiplier 14 can be read on the other scale in the position in which its terminal B is connected to the input terminal C of the meter 12.

The operation of the first embodiment will now be described. In the normal operation of the absorptiometer, the switch 15 is connected at its terminal A to the input terminal C of the meter 12, and the current supplied to the cuvette 9 is controlled to be maintained constant while monitoring the cuvette current by the reading on the meter 12. As described hereinbefore, the cuvette 9 heated up to a very high temperature in the atomizing stage is consumed progressively after a long time of use, and its resistance value varies to vary the amount of power to be supplied thereto. It is therefore desirable to carry out necessary adjustment before a series of measurement steps are started so that the power of predetermined regulated level can always be supplied to the cuvette 9. This regulation is done in this embodiment in a manner as will be described presently.

For the purpose of regulation, the switch 15 is connected at its terminal B to the input terminal C of the meter 12 so as to indicate the output from the multiplier 14 on the meter 12. Under the above condition, a current is supplied to the cuvette 9 as usual. The output signal from the multiplier 14 represents the product VI of the voltage signal V indicative of the voltage applied across the cuvette 9 and the current signal I indicative of the cuvette current, and this product VI corresponds to the power supplied to the cuvette 9. Therefore, the variable resistor 16 is suitably adjusted until the meter 12 indicates the predetermined power value. The principle of regulation of the power supplied to the cuvette 9 by adjustment of the variable resistor 16 will now be briefly explained.

The current regulator circuit shown in FIG. 1 is equivalently expressed by a circuit as shown in FIG. 2. In FIG. 2, the symbols $I_o$, $I_c$, G and $\alpha$ represent the current setting signal applied to the input terminal 1 in FIG. 1, the cuvette current, the gain of the circuit, and the feedback factor of the negative feedback circuit, respectively, and the following relation holds:

$$(I_o - \alpha I_c)G = I_c$$

$$I_c = \frac{G}{1 + \alpha G} I_o \qquad \text{------------------ (1)}$$

Power consumption W of the cuvette 9 is given by $I_c^2 R$, where R is the resistance of the cuvette 9. Thus, when the resistance R increases due to the progressive consumption of the cuvette 9, it is necessary to decrease the cuvette current $I_c$ by the corresponding amount. It can be seen from the equation (1) that $I_c$ can be decreased by decreasing $I_o$ or increasing $\alpha$.

Let $\Delta R$ be the variation of the resistance R of the cuvette 9. Then, the following equation should hold so as to maintain constant the power consumption W of the cuvette 9:

$$W = I_o^2 R = I_c^2 (R + \Delta R)$$

From this equation, $I_c$ is expressed as

$$I_c = \sqrt{\frac{R}{R + \Delta R}} I_o = K \cdot I_o \qquad \text{---------- (2)}$$

Therefore, in the case of regulating the value of $\alpha$ or in the case of regulating the value of $I_o$, the power

consumption W of the cuvette 9 can be maintained constant when the value of current $I_c$ after regulation is equal to the value given by the equation (2).

According to this embodiment, the switch 15 is changed over to the position connected at its terminal B to the input terminal C of the meter 12 prior to or during the process of measurement of a sample, and, while reading the value of power supplied to the cuvette 9 on the meter 12, the variable resistor 16 is suitably adjusted until the power of predetermined regulated level is supplied to the cuvette 9. Thus, the increment of power supplied to the cuvette 9 (the temperature increment) due to the variation of the resistance value of the cuvette 9 resulting from the consumption of the cuvette 9 can be compensated so as to maintain constant the level of power supplied to the cuvette 9. This emboidment is therefore advantageous in that the accuracy of measurement of a sample can be improved, and wasteful power consumption of the cuvette 9 can be saved to extend the useful service life of the cuvette 9. Further, according to the embodiment, the increment of power is compensated prior to or during the process of sample measurement by adjusting the variable resistor 16 for compensating the variation of the resistance value of the cuvette 9. This embodiment is therefore also advantageous in that the accuracy of the resistance value of the cuvette 9 need not be strictly specified, thereby simplifying the process control of the cuvette 9 and reducing the cost of manufacture of the cuvette 9.

When heavy consumption occurs on the cuvette 9, the adjusting range of the variable resistor 16 is correspondingly widened. According to the embodiment, the variable resistor 16 is not adjusted any more and the cuvette 9 is replaced by a new one when the adjusting range of the variable resistor 16 reaches a limit provided by a stopper. This embodiment is therefore also advantageous in that the maintenance and inspection of the cuvette 9 is facilitated because the time of replacement of the cuvette 9 can be clearly indicated.

Although, in the embodiment described above, the variable resistor 16 in the feedback circuit is utilized as means for compensating the increment of current supplied to the cuvette 9, the effect similar to that described above can be achieved by making variable the resistor 3 connected to the input amplifier 2 amplifying the current setting signal $I_O$ or by making variable the gain of the input amplifier 2 (corresponding to regulation of $I_O$ in the equation (1)).

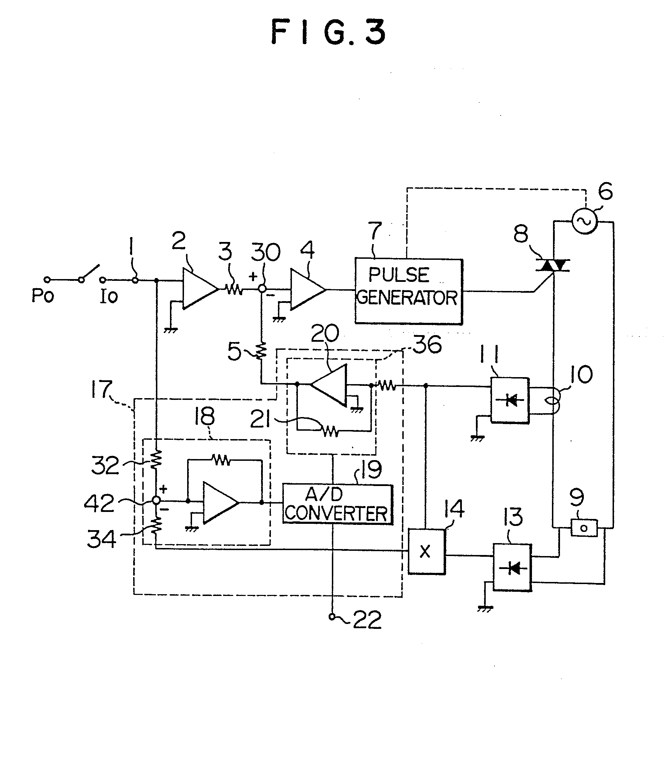

FIG. 3 is a circuit diagram of another embodiment of the power supply device according to the present invention. In FIG. 3, the same reference numerals are used to designate the same or equivalent parts appearing in FIG. 1.

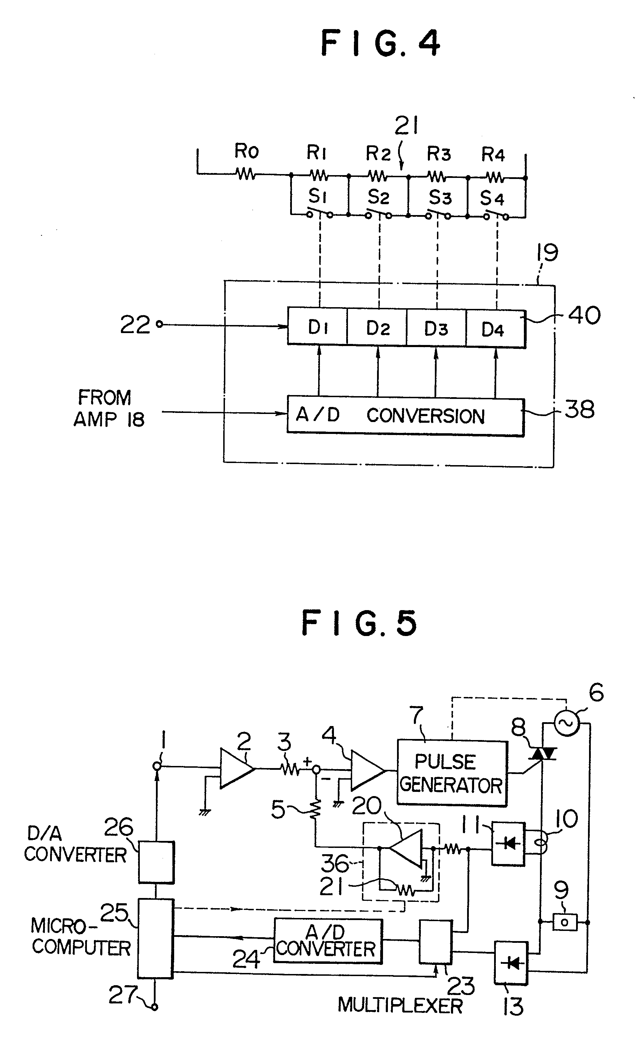

In this second embodiment, the variable resistor 16 in the first embodiment shown in FIG. 1 is arranged to be automatically adjusted so as to automatically regulate the power value indicated on the meter 12. Thus, in FIG. 3, the variable resistor 16 shown in FIG. 1 is replaced by a current compensation circuit 17 enclosed by dotted lines. This current compensation circuit 17 includes a differential amplifier 18, an A/D converter 19 and a variable-gain amplifier 36. The difference signal indicative of the difference between the current setting signal applied to the input terminal 1 and the output signal from the multiplier 14 is applied through an adder 42 to one of the input terminals of the differential amplifier 18 which is grounded at the other input terminal and connected at its output terminal to the A/D converter 19. The variable-gain amplifier 36 includes a fixed-gain amplifier 20 and a gain-regurating variable resistor 21 and is thus of the known type in which the gain of the amplifier 36 can be varied by varying the resistance value of the variable resistor 21. The differential amplifier 18 amplifies the difference signal which is indicative of the difference between the current setting signal applied to the input terminal 1 and the output signal from the multiplier 14 and which is regulated as described later, and its analog output signal is converted into a digital signal by the A/D converter 19. As shown in FIG. 4, the A/D converter 19 includes an A/D conversion circuit 38 and a latch circuit 40. In response to a current compensation signal applied manually to its input terminal 22 through suitable means (not shown), the latch circuit 40 latches and holds the digital signal generated and applied from the A/D conversion circuit 38 at that time. The contents of the latch circuit 40 remain unchanged until the next actuating signal is applied to its input terminal 22. As also shown in FIG. 4, the variable resistor 21 includes a plurality of resistor elements $R_O$, $R_1$, $R_2$, $R_3$ and $R_4$ connected in series, and a plurality of normally-closed switches $S_1$, $S_2$, $S_3$ and $S_4$ are connected in parallel with the resistor elements $R_1$, $R_2$, $R_3$ and $R_4$ respectively. The resistor elements $R_1$, $R_2$, $R_3$ and $R_4$ are provided to correspond to the individual digits $D_1$, $D_2$, $D_3$ and $D_4$ respectively constituting a binary digital signal latched by the latch circuit 40 in the A/D converter 19. Thus, when one of the digits D corresponding to one of the resistor elements R is in state "1", the corresponding one of the switches S connected in parallel therewith is opened from the closed position. When, for example, the binary ditital signal latched by the latch circuit 40 is reprsented by four bits "1001", that is, when $D_1 = $ "1", $D_2 = $ "0", $D_3 = $ "0" and $D_4 = $ "1", the switches $S_1$ and $S_4$ are opened whereas the switches $S_2$ and $S_3$ remain closed. Consequently, the resistance value of the variable resistor 21 is given by $R_O + R_2 + R_3$ in such a case.

As described above, the input terminal of the differential amplifier 18 is connected to the output terminal of the adder 42 which generates the difference signal indicative of the difference between the current setting signal applied to the input terminal 1 and the output signal of the multiplier 14 indicative of the power consumption of the cuvette 9. When the cuvette 9 has its normal resistance value and the current of the value equal to the setting provided by the current setting signal is supplied to the cuvette 9, the level of the output signal from the multiplier 14 and the resistance values of resistors 32 and 34 in the differential amplifier 18 are so regulated that the output signal from the adder 42 is substantially null. The level of the output signal from the multiplier 14 and the resistance values of the resistors 32 and 34 are initially so regulated. Then, when the resistance of the cuvette 9 increases to vary its power consumption progressively due to progressive consumption of the cuvette 9, the differential amplifier 18 generates its output signal indicative of the increment of power consumption, and the A/D converter 19 converts such an analog signal into the corresponding digital signal. One or more of the switches S selected depending on the digital value are opened to increase the resistance value of the variable resistor 21 thereby increasing the gain of the variable-gain amplifier 36. This means that, the value of $\alpha$ in the equation (1) increases to decrease the value of $I_c$, so that the power consumption is regulated to be equal to the predetermined setting. The resistance value of the variable resistor 21 is $R_o$ when all of the switches $S_1$, $S_2$, $S_3$ and $S_4$ are in their closed position. This value $R_o$ determines the minimum gain of the variable-gain amplifier 36. On the other hand, the resistance value of the variable resistor 21 is $R_O + R_1 + R_2 + R_3 + R_4$ when all of the switches $S_1$, $S_2$, $S_3$ and $S_4$ are in their open position. This value $R_O + R_1 + R_2 + R_3 + R_4$ defines the maximum resistance of the variable resistor 21, hence, the maximum gain of the variable-gain amplifier 36. Therefore, the resistance values of the individual resistor elements $R_O$, $R_1$, $R_2$, $R_3$ and $R_4$ are selected depending on the required regulating range of the cuvette current $I_c$ relative to the same current setting signal. Further, since the output from the multiplier 14 increases with progressive consumption of the cuvette 9, the output from the adder 42 has generally a negative polarity. Therefore, the differential amplifier 18 is designed so as to generate an analog output signal of positive polarity by inverting the polarity of the output signal from the adder 42.

In the operation of the power supply device according to the second embodiment of the present invention, a current setting signal corresponding to a sample subjected to measurement is first applied to the input terminal 1. While supplying current to the cuvette 9 under constant current control, a required current compensation instruction signal is manually applied by suitable means (not shown) to the input terminal 22 of the latch circut 40. Depending on the level of the difference signal indicative of the difference between the current setting signal and the output signal appearing from the multiplier 14 at that time, the gain of the variable-gain amplifier 36 is automatically varied, thereby regulating the cuvette current so that the cuvette 9 consumes the power of predetermined regulated value in response to the same current setting signal. As described hereinbefore, the contents of the latch circuit 40 in the A/D converter 19 remain unchanged until the next actuating signal is applied to its input terminal 22. Therefore, the gain of the variable-gain amplifier 36 is also maintained at the regulated value, and the process of sample measurement is started under such a condition.

This second embodiment is also as advantageous as the first embodiment. The second embodiment is especially advantageous in that the sample can be measured with improved efficiency since the increment of power supplied to the cuvette 9 due to the increase in the resistance of the cuvette 9 can be automatically compensated so that the power of predetermined setting can be supplied to the cuvette 9. Although the feedback rate of the current signal is varied to control the value of current supplied to the cuvette 9 in this second embodiment, the gain of the input amplifier 2 amplifying the current settijng signal may be varied in a similar manner so as to achieve the same effect.

FIG. 5 is a circuit diagram of still another embodiment of the power supply device accoding to the present invention. In FIG. 5, the same reference numerals are used to designate the same or equivalent parts appearing in FIG. 3.

In this third embodiment, the current rectifier 11 and voltage rectifier 13 are connected at their output terminals to the corresponding input terminals respectively of a multiplexer 23 which is connected at its output terminal to a microcomputer 25 through an A/D converter 24. This microcomputer 25 is connected at one of its output terminals to an amplifier 36 similar to the variable-gain amplifier shown in FIG. 3 and at the other output terminal to the input terminal 1 of the device through a D/A converter 26. The numeral 27 designates an input terminal for applying a current compensation instruction signal to the microcomputer 25.

The operation of this third embodiment will now be described. In response to the application of a current compensation instruction signal to the input terminal 27, the microcomputer25 starts its current compensating operation according to a pre-set program. First of all, a current setting signal $I_o$ is applied through the D/A converter 26 to the input terminal 1 for a period of time required for executing the current compensating operation described below. This current setting signal $I_o$ may be previously stored in an ROM provided in the microcomputer 25 to be read out in response to the application of the current compensation instruction signal to the input terminal 27. In another form, various different current setting signals may be previsouly stored in the ROM so that one of them can be selected depending on the sample to be subjected to measurement, and the selected current setting signal may be read out from the ROM in response to the application of the current compensation instruction signal. In any case, the power supply device operates under constant current control in response to the current setting analog signal applied to the input terminal 1, and the regulated current corresponding to the resistance value of the cuvette 9 at that time is supplied to the cuvette 9. Then, the computer 25 applies a command signal to the multiplexer 23 so that the output signal from the current detector 10 and the output signal from the voltage detector 13 are sequentially sampled. The individual sampled output signals from the multiplexer 23 are converted into digital signals by the A/D converter 24 and then stored in the computer 25. The multiplexer 23 may sample one output signal from each of the current detector 10 and voltage detector 13 sequentially or may alternately sample a plurality of output signals. In the latter case, each of digital values obtained by sampling a plurality of output signals from each of the current detector 10 and voltage detector 13 is stored in the microcomputer 25. Then, the digital values of the two output signals stored in the microcomputer 25 or the mean digital values stored in the microcomputer 25 are multiplied. The result of multiplication is naturally indicative of the power consumed by the cuvette 9, and this power value is compared with the predetermined power setting corresponding to the current setting signal $I_o$ applied to the

input terminal 1, thereby producing a digital signal indicative of the difference therebetween and holding such a signal. This digital signal corresponds to the digital output signal from the A/D converter 19 in the second embodiment shown in FIG. 3 and is registered in a register (corresponding to the latch circuit 40 shown in FIG. 4) in the microcomputer 25 until the next current compensation instruction signal is applied to the input terminal 27. Thus, the gain of the variable-gain amplifier 36 is defined on the basis of the digital value, as in the case of the second embodiment shown in FIG. 3. This gain regulation completes the current compensating operation.

The variable-gain amplifier 36 may be replaced by a fixed-gain amplifier or a fixed resistor so as to maintain constant the gain of current signal feedback in the current regulator circuit, thereby correcting the current setting provided by the current setting signal applied to the input terminal 1 of the power supply device. In such a case, the ratio between the result of multiplication described above and the power setting is calculated to find the value corresponding to the value of K in the equation (2), thereby producing a corrected current setting signal $KI_o$, and the microcomputer 25 is so programmed as to store such a signal. This signal $KI_o$ is applied from the microcomputer 25 to the input terminal 1 after being converted into an analog signal by the D/A converter 26.

It will be understood from the foregoing detailed description that the present invention provides a power supply device for an atomizer used in an atomic absorptiometer, in which the current supplied to a cuvette is compensated to correspond to a variation of the resistance value of the cuvette so that the power of predetermined regulated level can be always supplied to the cuvette regardless of variations of the resistance value of the cuvette.

CLAIMS:

1.      A power supply device for an atomizer (9) of
resistance heating type used in an atomic absorptiometer,
comprising means (11, 13) for detecting the current supplied
to and the voltage applied across said atomizer (9), a
constant current control circuit including a negative feedback circuit (5,16; 5,36) provided for the negative
feedback of the output signal from said current detecting
means for controlling the current supplied to said atomizer
(9) thereby maintaining said current at a constant value
corresponding to a given current setting signal $(I_o)$
applied to an input terminal (1), characterised in that the
device has means (14; 25) for calculating the power supplied
to said atomizer (9) on the basis of the output signals
from said current detecting means and said voltage detecting
means (11, 13), and  current compensating means (16; 36)
for manually or automatically regulating the level of said
current setting signal or the rate of negative feedback
through said negative feedback circuit depending on the output signal from said power calculating means (14; 25).

2.      A power supply device as claimed in Claim 1,
wherein said current compensating means includes a
variable resistor (16) which is manually adjusted and
connected to said negative feedback circuit.

3.      A power supply device as claimed in Claim 1,
wherein said current compensating means includes first
means (18, 19) for generating an output signal indicative
of a variation of the output signal from said power calculating means (14), a variable-gain amplifier (36) connected to said negative feedback circuit for changing the rate of negative feedback, and second means (40, 21) for automatically regulating the gain of said variable-gain amplifier (36) in response to the output signal from said first means.

4. A power supply device as claimed in Claim 1, wherein said current compensating means includes a computer (25) so programmed as to calculate the numerical value corresponding to the required variation of the gain of said variable-gain amplifier (36) connected to said negative feedback circuit for changing the rate of negative feedback in response to the variation of the output signal from said power calculating means (14), and means (40, 21) for automatically regulating the gain of said variable-gain amplifier (36) on the basis of said numerical value calculated by said computer (25).

5. A power supply device as claimed in Claim 1, wherein said current compensating means includes first means (18, 19) for generating an output signal indicative of a variation of the output signal from said power calculating means (14), and second means (40, 21) for automatically regulating the level of said current setting signal in response to the output signal from said first means.

6. A power supply device as claimed in Claim 1, wherein said current compensating means includes a microcomputer (25) so programmed as to automatically regulating the level of said current setting signal in response to the variation of the output signal from said power calculating means (14).

# F I G. I

# F I G. 2

# F I G. 3

# F I G. 4

# F I G. 5